# EUROPÄISCHE PATENTSCHRIFT

(11) **EP 1 918 639 B1**
(45) Veröffentlichungstag und Bekanntmachung des Hinweises auf die Patenterteilung: **14.11.2012**
(21) Anmeldenummer: 07017425.5
(22) Anmeldetag: 05.09.2007
(51) Int. Cl.: F23C 7/00, F23C 7/04, F23D 3/40, F23L 15/00

(54) **Brennerbaugruppe**
Burner unit
Composant de brûleur

(30) Priorität: 30.10.2006 DE 102006051138
(43) Veröffentlichungstag der Anmeldung: 07.05.2008
(73) Patentinhaber: J. Eberspächer GmbH & Co. KG, 73730 Esslingen (DE)
(72) Erfinder: Schmidt, Oliver, 73207 Plochingen (DE)
(74) Vertreter: Ruttensperger, Bernhard

(56) Entgegenhaltungen:
- EP-A- 0 433 862
- WO-A-2007/113186
- US-A- 4 255 122

## Beschreibung

Die vorliegende Erfindung betrifft eine Brennerbaugruppe, wie sie beispielsweise in einem brennstoffbetriebenen Fahrzeugheizgerät zur Erzeugung und Übertragung von Wärme auf ein zu erwärmendes- Medium eingesetzt werden kann, oder in einer Reformeranordnung eingesetzt werden kann, um einerseits ein wasserstoffhaltiges Reformat zu erzeugen, andererseits aber auch in einer Aufwärmphase als Brenner genutzt zu werden.

Eine derartige Brennerbaugruppe umfasst im Allgemeinen ein im Wesentlichen topfartiges Brennkammergehäuse mit einer Umfangswandung und einer Bodenwandung sowie einem Lufteinlassbereich zu einer Brennkammer in einem im Wesentlichen zentralen Bereich der Bodenwandung. Die zur Verbrennung bzw. ggf. zur Reformaterzeugung eingeleitete Luft wird durch ein Gebläse gefördert und strömt entlang der Bodenwandung zu dem zentralen Bereich derselben und über den Einlassbereich in die Brennkammer.

Vor allem in Verbindung mit dem zunehmend stärker werdenden Wunsch, derartige Brennerbaugruppen auch für andere Brennstoffe, wie z. B. PME, einzusetzen, besteht das Problem, dass die aus der Umgebung aufgenommene und eingeleitete Luft grundsätzlich eine vergleichsweise niedrige Temperatur aufweist und somit bei Durchmischung und Verbrennung mit derartigen Brennstoffen eine übermäßig starke Schadstoffentwicklung durch die vermittels dieser Luft generierte Kühlwirkung in der Brennkammer erzeugt wird.

Aus der EP-A-0 433 862 ist eine Brennerbaugruppe für ein Fahrzeugheizgerät bekannt, bei welcher die zunächst entlang einer Außenumfangswandung eines eine Brennkammer begrenzenden Gehäuses geführte Verbrennungsluft durch eine zentrale Mündung in einer Bodenwandung dieses Gehäuses in die Brennkammer eintritt. Durch diese zentrale Mündung hindurch wird auch der von einem Ultraschallzerstäuber in Partikelform abgegebene Brennstoff mit der als Drallströmung eingeleiteten Luft geführt.

Die nachveröffentlichte WO 2007/113186 A offenbart einen Brenner, bei welchem die durch mehrfache Umlenkung vor dem Eintritt in eine Brennkammer geführte Verbrennungsluft entlang der Außenseite einer Umfangswandung der Brennkammer geführt wird, bevor sie über in diese Umfangswandung gebildete Öffnung in Richtung Brennkammer eingeleitet wird.

Die US-A-4,255,122 offenbart einen Brenner, bei welchem die entlang einer Außenseite der Umfangswandung einer Brennkammer geführte Verbrennungsluft über mehrere in einer Bodenwandung vorgesehene schlitzförmige Öffnungen eintritt. Ein in die Brennkammer ragendes Verdampferrohr gibt den Brennstoff über eine der Bodenwandung zugewandt liegende Öffnung ab.

Es ist die Aufgabe der vorliegenden Erfindung, eine Brennerbaugruppe, insbesondere für ein Fahrzeugheizgerät oder eine Reformeranordnung vorzusehen, mit welcher eine verbesserte Verbrennungscharakteristik erzielbar ist.

Erfindungsgemäß wird diese Aufgabe gelöst durch eine Brennerbaugruppe, insbesondere für ein Fahrzeugheizgerät oder eine Reformeranordnung, gemäß dem Anspruch 1. Diese umfasst ein im Wesentlichen topfartiges Brennkammergehäuse mit einer Umfangswandung und einer Bodenwandung sowie einem Lufteinlassbereich zu einer Brennkammer in einem im Wesentlichen zentralen Bereich der Bodenwandung, einen Luftzuführbereich zum Leiten der von einem Gebläse geförderten Luft zu dem Lufteinlassbereich, wobei der Luftzuführbereich einen wenigstens teilweise ringartigen ersten Luftströmungsraum mit einem Eintritt und einem Austritt zu einem wenigstens teilweise ringartigen zweiten Luftströmungsraum aufweist, wobei der erste Luftströmungsraum den zweiten Luftströmungsraum wenigstens bereichsweise umgibt und der zweite Luftströmungsraum an seinem bezüglich einer Längsachse der Brennerbaugruppe radial inneren Bereich in Verbindung mit dem Lufteinlassbereich ist.

Bei der erfindungsgemäß aufgebauten Brennerbaugruppe strömt die in die Brennkammer einzuleitende Luft zunächst durch den ersten Luftströmungsraum, dann durch den zweiten Luftströmungsraum und erst von diesem zweiten Luftströmungsraum zum Lufteinlassbereich. Das heißt, es wird ein im Vergleich zum Stand der Technik deutlich längerer Strömungsweg erzwungen, der eine entsprechend stärkere thermische Wechselwirkung mit den diesen Strömungsweg begrenzenden Bauteilen bzw. Baugruppen mit sich bringt. Da insbesondere im Verbrennungsbetrieb all diese Bauteile bzw. Baugruppen zunehmend erwärmt werden, kann somit auch die in die Brennkammer einzuleitende Luft mehr Wärme aufnehmen, so dass der durch diese in die Brennkammer eingeleitete Luft generierte Kühleffekt abgemindert bzw. beseitigt werden kann. Die Folge davon ist eine deutlich bessere Verbrennungsqualität mit geringerem Schadstoffausstoß und einer deutlich geringeren Gefahr der Erzeugung von Ablagerungen im Bereich des Brennkammergehäuses.

Der Eintritt kann wenigstens eine Eintrittsöffnung aufweisen. Entsprechend kann der Austritt wenigstens eine Austrittsöffnung aufweisen. Eintritt und Austritt können bezüglich der Längsachse der Brennerbaugruppe einander im Wesentlichen gegenüberliegend angeordnet sein.

Um die in die Brennkammer einzuleitende Luft direkt vor Einleitung in die Brennkammer in die gewünschte Richtung umlenken zu können und ihr erforderlichenfalls einen Drall geben zu können, wird vorgeschlagen, dass der zweite Luftströmungsraum mit dem Lufteinlassbereich über eine wenigstens eine Luftleitfläche umfassende Leiteinrichtung in Verbindung ist.

Erfindungsgemäβ wird eine sehr gleichmäßige Verteilung der in die Brennkammer einzuleitenden Luft im gesamten Volumenbereich der Brennkammer dadurch erhalten, dass der Lufteinlassbereich einen von der Bodenwandung ausgehend sich in den von der Umfangswandung umgebenen Raumbereich erstreckenden und eine Mehrzahl von Luftdurchtrittsöffnungen aufweisenden Lufteinlassansatz umfasst. Auf diese Art und Weise kann dafür gesorgt werden, dass die Luft ausgehend vom zentralen Bereich der Brennkammer sich in dieser verteilen kann.

Bei einer besonders vorteilhaften Ausgestaltungsform kann vorgesehen sein, dass der erste Luftströmungsraum oder/und der zweite Luftströmungsraum in einer ersten axialen Richtung begrenzt sind durch eine an die Umfangswandung anschließende erste Trennwand. Da die erste Trennwand an die Umfangswandung anschließt und die Umfangswandung denjenigen Raumbereich, in welchem die Verbrennung abläuft, unmittelbar begrenzt, kann somit auch die erste Trennwand Wärme aufnehmen und auf die in Richtung zur Brennkammer strömende Luft übertragen. Dabei ist es besonders vorteilhaft, wenn die erste Trennwand den ersten Luftströmungsraum oder/und den zweiten Luftströmungsraum von einem Abgasströmungsraum trennt. Auch die im Abgasströmungsraum strömenden Abgase transportieren Wärme und übertragen diese auf die erste Trennwand und somit über die erste Trennwand auf die in die Brennkammer einzuleitende Luft.

Weiterhin kann vorgesehen sein, dass der erste Luftströmungsraum in seinem radial äußeren Bereich begrenzt ist von einer an die erste Trennwand anschließenden Außenwand. Durch den direkten Kontakt der Außenwand mit der Trennwand kann die Außenwand Wärme von der Trennwand aufnehmen und somit auch auf die entlang der Außenwand strömende Luft übertragen. Dabei ist es weiterhin vorteilhaft, wenn die Außenwand in einem über den ersten Luftströmungsraum hinausgehenden Bereich den Abgasströmungsraum begrenzt.

In der zweiten axialen Richtung kann der erste Luftströmungsraum begrenzt sein durch eine an die Außenwand anschließende Stirnwand. Dabei kann weiter vorgesehen sein, dass der erste Luftströmungsraum einen zwischen der Stirnwand und einer diesen vom zweiten Luftströmungsraum trennenden zweiten Trennwand gebildeten Raumbereich umfasst, an welchen im radial äußeren Bereich ein ringartiger Raumbereich des ersten Luftströmungsraums anschließt.

Eine weitere Beeinflussung der Temperatur der in den Bereich der Brennkammer einzuleitenden Luft kann dadurch erhalten werden, dass der zweite Luftströmungsraum an seiner Innenseite wenigstens bereichsweise begrenzt ist von der Umfangswandung.

Die vorliegende Erfindung wird nachfolgend mit Bezug auf die beiliegenden Zeichnungen beschrieben. Es zeigt:
- Fig. 1: eine Prinzip-Längsschnittansicht einer erfindungsgemäß aufgebauten Brennergruppe;
- Fig. 2: eine Schnittansicht der in Fig. 1 gezeigten Brennerbaugruppe, geschnitten längs einer Linie II-II in Fig. 1.

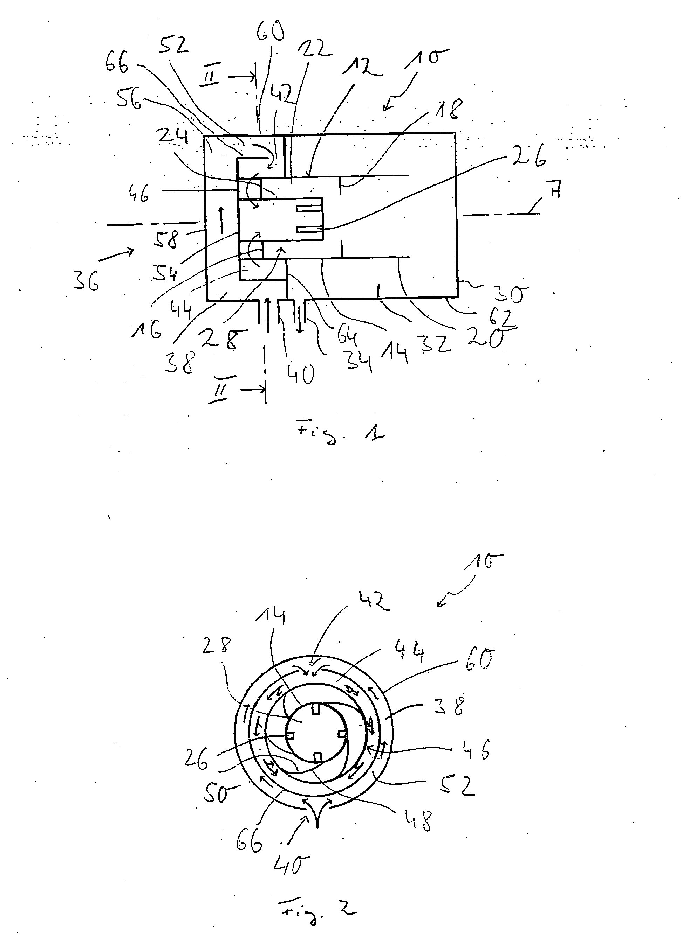

Die in Fig. 1 dargestellte Brennerbaugruppe ist allgemein mit 10 bezeichnet. Diese Brennerbaugruppe 10 umfasst ein im Wesentlichen topfartiges Brennkammergehäuse 12 mit einer im Wesentlichen zylindrischen Umfangswandung 14 und einer daran anschließenden Bodenwandung 16. Es sei darauf hingewiesen, dass die Umfangswandung 14 und die Bodenwandung 16 miteinander integral ausgestaltet sein können. Selbstverständlich ist es auch möglich, eine separate Bodenbaugruppe vorzusehen und diese mit der Umfangswandung 14 zu verbinden. Die Umfangswandung 14 geht jenseits einer Flammblende 18 über in ein Flammrohr 20, entlang welchem die bei der Verbrennung in einer Brennkammer 22 entstehenden Verbrennungsabgase strömen.

Von einem bezüglich einer Längsachse A zentralen Bereich der Bodenwandung 16 geht ein im Wesentlichen ebenfalls zylindrisch ausgestalteter Lufteinlassansatz 24 aus und erstreckt sich in die Brennkammer 22 bzw. in den von der Umfangswandung 14 umgebenen Raumbereich. Der Lufteinlassansatz 24 weist in seinem von der Bodenwandung 16 entfernt liegenden Endbereich beispielsweise schlitzartige Durchtrittsöffnungen 26 auf und bildet bei der dargestellten Ausgestaltungsform im Wesentlichen einen Lufteinlassbereich 28.

In der Brennkammer 22 bzw. an der Bodenwandung 16 oder/und der Umfangswandung 14 kann ein poröses Verdampfermedium vorgesehen sein, beispielsweise ausgebildet aus Geflechtmaterial, Vliesmaterial oder dergleichen, welches von einer nicht dargestellten Brennstoffzuführleitung flüssigen Brennstoff aufnimmt, in seinem Innenvolumenbereich verteilt und in Richtung zur Brennkammer 22 hin abdampft. Um diese Abdampfung zu unterstützen, kann dem porösen Verdampfermedium eine elektrisch erregbare Heizeinrichtung zugeordnet sein. Ferner ist bei derartigen Brennerbaugruppen 10 allgemein ein Zündorgan, beispielsweise in Form eines Glühstifts, vorgesehen, um die Verbrennung des aus Brennstoffdampf und in die Brennkammer 22 eingeleiteter .Luft gebildeten Gemisches zu starten. Die Verbrennungsabgase strömen dann, wie bereits dargelegt, entlang des Flammrohrs 20, treten aus diesem aus und werden bei Einsatz der Brennerbaugruppe 10 in einem Heizgerät von einem Wärmetauschergehäuse 30 umgelenkt. Die Verbrennungsabgase strömen dann entlang eines außerhalb des Flammrohrs 20 gebildelten Abgasströmungsraums 32 zu einem Abgasauslass 34.

Die in die Brennkammer 22 einzuleitende Luft wird über einen allgemein mit 36 bezeichneten Luftzuführbereich in Richtung zur Brennkammer 22 geleitet. Dieser Luftzuführbereich 36 umfasst einen ersten Luftströmungsraum 38, in welchen die von einem Gebläse herangeförderte Luft im Bereich eines Eintritts 40 eintritt. Der erste Luftströmungsraum 38 weist weiter einen Austritt 42 auf, an welchem die Luft in einen zweiten Luftströmungsraum 44 eintritt. Über eine Leiteinrichtung 46, welche eine Mehrzahl von in Fig. 2 auch erkennbaren gekrümmten Luftleitschaufeln 48 mit entsprechenden Leitflächen 50 umfasst, gelangt die Luft vom zweiten Luftströmungsraum 46 zum Lufteinlassbereich 28 und in die Brennkammer 22.

Man erkennt in den Fig. 1 und 2, dass der zweite Luftströmungsraum 44 im Wesentlichen ringartig ausgebildet ist und die Leiteinrichtung 46 bezüglich der Längsachse A radial außen umgibt. An seiner radialen Innenseite ist der zweite Luftströmungsraum 44 bereichsweise begrenzt durch die Umfangswandung 14. Radial außen ist der zweite Luftströmungsraum 44 umgeben von einem ringartigen Raumbereich 52 des ersten Luftströmungsraums 38, zu welchem auch der Eintritt 40 offen ist. Durch eine Trennwand 54 ist der zweite Luftströmungsraum 44 getrennt von einem scheibenartigen Raumbereich 56 des ersten Luftströmungsraums 38, welcher in seinem radial äußeren Bereich übergeht in den ringartigen Raumbereich 52. Der scheibenartige Raumbereich 56 ist an seiner anderen axialen Seite begrenzt durch eine Stirnwand 58 und ist radial außen begrenzt durch eine Außenwand 60, die unmittelbar übergehen kann in eine Außenwand 62 des Wärmetauschergehäuses 30 bzw. an diese Außenwand 62 anschließt. In axialer. Richtung sind die beiden Raumbereiche 38 und 44 weiterhin begrenzt durch eine Trennwand 64, welche den Abgasströmungsraum 32 vom ersten Luftströmungsraum 38 und vom zweiten Luftströmungsraum 44 trennt. In demjenigen Bereich, in welchem der erste Luftströmungsraum 38 mit seinem ringartigen Raumbereich 52 den zweiten Luftströmungsraum 44 umgibt, sind diese getrennt von einer im Wesentlichen ringartigen Trennwand 66, in welcher auch der Austritt 42 gebildet ist.

Auf ihrem Strömungsweg vom Eintritt 40 zur Brennkammer 22 strömt also die Luft zunächst durch den ersten Luftströmungsraum 38, wobei ein Teil der Luft im ringartigen Raumbereich 52 in ein Teil im scheibenartigen Raumbereich 56 strömt. Da der Eintritt 40 und der Austritt 42, von welchem jeder mindestens eine Öffnung umfassen kann, bezüglich der Längsachse A einander im Wesentlichen diametral gegenüberliegen; muss, wie in Fig. 2 verdeutlicht; die Luft jeweils entlang der Hälfte der Umfangserstreckung des ringartigen Raumbereichs 52 strömen, bevor sie den Austritt 42 erreicht. Dort gelangt die Luft in den zweiten, ebenfalls ringartig ausgestalteten Luftströmungsraum 44, strömt entlang dessen ringartiger Erstreckung und tritt, geleitet durch die Leitschaufeln 48, dann nach radial innen mit einem vorbestimmten Drall in den Lufteinlassansatz 24 ein. Von diesem gelangt sie über die Durchtrittsöffnungen 26 in die Brennkammer 22.

In diesem vorangehend beschriebenen vergleichsweise langen Strömungsweg ist die zu verbrennende Luft über eine vergleichsweise große Strömungsfläche in Kontakt mit Oberflächen; die im Laufe des Verbrennungsbetriebs erwärmt werden und somit Wärme auch auf die strömende Luft übertragen können. Vor allem in demjenigen Bereich, wo der zweite Luftströmungsraum 44 radial innen von der Umfangswandung 14 begrenzt ist und beide Luftströmungsräume 38, 44 von der Trennwand 64 begrenzt sind, findet eine vergleichsweise starke thermische Wechselwirkung statt, da jeweils an der anderen Seite dieser Wände bzw. Wandungen vergleichsweise heiße Medien, nämlich die Verbrennungsabgase strömen bzw. die Verbrennung existent ist. Dort wird also ein großer Wärmeanteil auf die in den Lufteinlassansatz 24 strömende Luft übertragen. Auch die Außenwand 60 wird durch ihren direkten Kontakt mit der Trennwand 64 und mit der Außenwand 62 des Wärmetauschergehäuses 30 vergleichsweise stark erwärmt und erwärmt mithin auch die mit dieser in Kontakt stehende Stirnwand 58. Somit ist nahezu entlang des gesamten Strömungswegs für eine Wärmeübertragung auf die in die Brennkammer 22 einzuleitende Luft gesorgt, so dass diese mit einem deutlich angehobenen Temperaturniveau zur Verbrennung bzw. Durchmischung mit dem verdampften Brennstoff bereitgestellt wird.

Diese Erwärmung der in die Brennkammer 22 einzuleitenden Luft führt im Betrieb zu einer Mehrzahl an Vorteilen. So wird das Temperaturniveau in der Brennkammer 22 durch eine nicht so kalte bzw. bereits vorgewärmte Luft weniger stark abgesenkt. Dies führt zu besseren Abdampfungsbedingungen für den Brennstoff und senkt gleichzeitig die Gefahr, dass Ablagerungen im Bereich der Brennkammer bzw. des Brennkammergehäuses gebildet werden. Ferner werden verbesserte Abgaswerte erzielt und die Betriebssicherheit kann erhöht werden. Da weiterhin das Temperaturniveau in der Brennkammer nicht mehr so stark abhängig ist von den Außenumgebungsbedingungen, insbesondere der Außentemperatur, kann das Einsatzgebiet bzw. der zulässige Temperaturbereich, in welchem das Heizgerät noch arbeiten kann, erweitert werden.

Es sei abschließend darauf hingewiesen, dass die vorangehenden Vorteile sowohl erreicht werden können, wenn die Brennerbaugruppe zum Erzeugen und Übertragen von Wärme auf ein zu erwärmendes Medium; wie z. B. die in einen Fahrzeuginnenraum einzuleitende Luft oder zu erwärmendes Wasser, genutzt wird, beispielsweise als Standheizung oder als Zuheizer. Selbstverständlich kann eine derart aufgebaute Brennerbaugruppe auch eingesetzt werden für- einen Reformer, wo dann in der Brennkammer, die phasenweise dann auch lediglich als Mischkammer wirksam ist, ein Gemisch aus Luft und Brennstoff bzw. Kohlenwasserstoffdampf, ggf. noch durchmischt mit Wasser, erzeugt wird, um aus diesem Gemisch in einer katalytischen Reaktion ein wasserstoffhaltiges Reformat zu erzeugen. Insbesondere in der Startphase kann eine derartige Anordnung dann auch tatsächlich als Brenner betrieben werden, um durch Verbrennung des Luft/Brennstoffdampf-Gemisches Wärme bereitzustellen, die in den Verbrennungsabgasen transportiert wird und auf die stromabwärts folgenden Systembereiche des Reformers, insbesondere das Katalysatormaterial, übertragen werden kann.

## Patentansprüche

1. Brennerbaugruppe, insbesondere für ein Fahrzeugheizgerät oder eine Reformeranordnung, umfassend:
- ein im Wesentlichen topfartiges Brennkammergehäuse (12) mit einer Umfangswandung (14) und einer Bodenwandung (16) sowie einem Lufteinlassbereich (28) zu einer Brennkammer (22) in einem im Wesentlichen zentralen Bereich der Bodenwandung (16),
- einen Luftzuführbereich (36) zum Leiten der von einem Gebläse geförderten Luft zu dem Lufteinlassbereich (28), wobei der Luftzuführbereich (36) einen wenigstens teilweise ringartigen ersten Luftströmungsraum (38) mit einem Eintritt (40) und einem Austritt (42) zu einem wenigstens teilweise ringartigen zweiten Luftströmungsraum (44) aufweist, wobei der erste Luftströmungsraum (38) den zweiten Luftströmungsraum (44) wenigstens bereichsweise umgibt und der zweite Luftströmungsraum (44) an seinem bezüglich einer Längsachse (A) der Brennerbaugruppe (10) radial inneren Bereich in Verbindung mit dem Lufteinlassbereich (28) ist,
**gekennzeichnet dadurch, dass** der Lufteinlassbereich (28) einen von der Bodenwandung (16) ausgehend sich in den von der Umfangswandung (14) umgebenen Raumbereich erstreckenden und eine Mehrzahl von Luftdurchtrittsöffnungen (26) aufweisenden Lufteinlassansatz (24) umfasst.

2. Brennerbaugruppe nach Anspruch 1,
**dadurch gekennzeichnet, dass** der Eintritt (40) wenigstens eine Eintrittsöffnung aufweist oder/und dass der Austritt (42) wenigstens eine Austrittsöffnung aufweist.

3. Brennerbaugruppe nach Anspruch 1 oder 2,
**dadurch gekennzeichnet, dass** der Eintritt (40) und der Austritt (42) bezüglich der Längsachse (A) einander im Wesentlichen gegenüber liegend angeordnet sind.

4. Brennerbaugruppe nach einem der Ansprüche 1 bis 3,
**dadurch gekennzeichnet, dass** der zweite Luftströmungsraum (44) mit dem Lufteinlassbereich (28) über eine wenigstens eine Luftleitfläche (50) umfassende Leiteinrichtung (46) in Verbindung ist.

5. Brennerbaugruppe nach einem der Ansprüche 1 bis 4,
**dadurch gekennzeichnet, dass** der erste Luftströmungsraum (38) oder/und der zweite Luftströmungsraum (44) in einer ersten axialen Richtung begrenzt sind durch eine an die Umfangswandung (12) anschließende erste Trennwand (64).

6. Brennerbaugruppe nach Anspruch 5,
**dadurch gekennzeichnet, dass** die erste Trennwand (64) den ersten Luftströmungsraum (38) oder/und den zweiten Luftströmungsraum (44) von einem Abgasströmungsraum (32) trennt.

7. Brennerbaugruppe nach Anspruch 5 oder 6,
**dadurch gekennzeichnet, dass** der erste Luftströmungsraum (38) in seinem radial äußeren Bereich begrenzt ist von einer an die erste Trennwand (64) anschließenden Außenwand (60).

8. Brennerbaugruppe nach Anspruch 7,
**dadurch gekennzeichnet, dass** die Außenwand (60) in einem über den ersten Luftströmungsraum (38) hinausgehenden Bereich den Abgasströmungsraum (32) begrenzt.

9. Brennerbaugruppe nach Anspruch 7 oder 8,
**dadurch gekennzeichnet, dass** der erste Luftströmungsraum (38) in
einer zweiten axialen Richtung begrenzt ist durch eine an die Außenwand (60) anschließende Stirnwand (58).

10. Brennerbaugruppe nach Anspruch 9,
**dadurch gekennzeichnet, dass** der erste Luftströmungsraum (38) einen zwischen der Stirnwand (58) und einer diesen vom zweiten Luftströmungsraum (44) trennenden zweiten Trennwand (54) gebildeten Raumbereich (56) umfasst, an welchen im radial äußeren Bereich ein ringartiger Raumbereich (52) des ersten Luftströmungsraums (38) anschließt.

11. Brennerbaugruppe nach einem der Ansprüche 1 bis 10,
**dadurch gekennzeichnet, dass** an der Bodenwandung (16) und/oder Umfangswandung (14) ein poröses Verdampfermedium angeordnet ist.

12. Brennerbaugruppe nach einem der Ansprüche 10 oder Anspruch 11, sofern auf Anspruch 10 rückbezogen,
**dadurch gekennzeichnet, dass** der Eintritt (40) zu dem ringartigen Raumbereich (52) des ersten Luftströmungsraums (38) offen ist.

13. Brennerbaugruppe nach einem der Ansprüche 10 bis 12, sofern auf den Anspruch 3 rückbezogen,
**dadurch gekennzeichnet, dass** der ringartige Raumbereich (52) für die am Eintritt (40) eintretende Luft einen jeweils entlang der Hälfte seiner Umfangserstreckung zu dem gegenüberliegend angeordneten Austritt (42) führenden Strömungsweg bereitstellt.

14. Brennerbaugruppe nach einem der Ansprüche 1 bis 13
**dadurch gekennzeichnet, dass** der zweite Luftströmungsraum (44) an seiner Innenseite wenigstens bereichsweise begrenzt ist von der Umfangswandung (14).

15. Brennerbaugruppe nach Anspruch 6 oder einem der Ansprüche 7 bis 14, sofern auf Anspruch 6 rückbezogen,
**dadurch gekennzeichnet, dass** ein in der ersten axialen Richtung an die Umfangswandung (14) anschließendes Flammrohr (20) den Abgasströmungsraum (32) ach innen begrenzt.

## Claims

1. A burner assembly, in particular for a vehicle heating device or a reformer arrangement, comprising:
- a substantially pot-like combustion chamber housing (12) with a circumferential wall (14) and a bottom wall (16) as well as an air inlet section (28) to a combustion chamber (22) in a substantially central part of the bottom wall (16),
- an air supply section (36) for guiding the air conveyed by a blower towards the air inlet section (28), the air supply section (36) providing an at least partly ring-like first air flow space (38) with an inlet (40) and an outlet (42) to an at least partly ring-like second air flow space (44), the first air flow space (38) at least partly surrounding the second air flow space (44) and the second air flow space (44) being in communication with the air inlet section (28) at its in relation to a longitudinal axis (A) of the burner assembly (10) radially inner section,
**characterized by** said air inlet section (28) comprising an air inlet joint (24) extending from the bottom wall (16) into the space surrounded by the circumferential wall (14) and comprising a plurality of air passage openings (26).

2. The burner assembly according to claim 1,
**characterized by** said inlet (40) having at least one inlet opening or/and by the outlet (42) having at least one outlet opening.

3. The burner assembly according to claim 1 or 2,
**characterized by** the inlet (40) and the outlet (42) being arranged substantially opposite to another in relation to the longitudinal axis (A).

4. The burner assembly according to one of claims 1 to 3, **characterized by** the second air flow space (44) being in communication with the air inlet section (28) via a guiding device (46) comprising at least one air guiding surface (50).

5. The burner assembly according to one of claims 1 to 4, **characterized by** the first air flow space (38) or/and the second air flow space (44) being defined in a first axial direction by a first dividing wall (64) adjacent to the circumferential wall (12).

6. The burner assembly according to claim 5,
**characterized by** the first dividing wall (64) separating the first air flow space (38) or/and the second air flow space (44) from an exhaust gas flow space (32).

7. The burner assembly according to claim 5 or 6,
**characterized by** the first air flow space (38) being defined in its radially outer section by an outer wall (60) adjacent to said first dividing wall (64).

8. The burner assembly according to claim 7,
**characterized by** said outer wall (60) defining the exhaust gas flow space (32) in an area extending beyond said first air flow space (38).

9. The burner assembly according to claim 7 or 8,
**characterized by** the first air flow space (38) being defined in its second axial direction by a front wall (58) adjacent to said outer wall (60).

10. The burner assembly according to claim 9,
**characterized by** the first air flow space (38) comprising a space (56) formed between said front wall (58) and a second dividing wall (54) separating the latter from said second air flow space (44), on which a ring-like space (52) of said first air flow space (38) abuts in the radially outer area.

11. The burner assembly according to one of claims 1 to 10,
**characterized by** a porous evaporator medium being arranged at the bottom wall (16) and/or the circumferential wall (14).

12. The burner assembly according to one of claim 10 or claim 11, if depending on claim 10,
**characterized by** the inlet (40) to the ring-like space (52) of the first air flow space (38) being open.

13. The burner assembly according to one of claims 10 to 12, if depending on claim 3,
**characterized by** the ring-like space (52) comprising a flow path for the air coming in at the inlet (40) leading to the opposite outlet (42) along half of its circumference respectively.

14. The burner assembly according to one of claims 1 to 13,
**characterized by** the second air flow space (44) being at its inner side at least partly defined by the circumferential wall (14).

15. The burner assembly according to claim 6 or one of claims 7 to 14, if depending on claim 6
**characterized by** a flame tube (20) adjacent to the circumferential wall (14) in its first axial direction defining the exhaust gas flow space (32) to the inside.

## Revendications

1. Un module de brûleur, en particulier pour un dispositif de chauffage d'un véhicule ou un arrangement de réformateur, comprenant :
- un boîtier de chambre de combustion (12) essentiellement en forme de pot avec un paroi circonférentiel (14) et un paroi de fond (16) ainsi qu'une
zone d'entrée d'air (28) à une chambre de combustion (22) dans une partie essentiellement centrale du paroi de fond (16),
- une zone d'alimentation en air (36) pour guider l'air transporté par une soufflerie vers la zone d'entrée d'air (28), la zone d'alimentation en air (36) comprenant un premier espace de flux d'air (38) au moins partiellement annulaire avec une entrée (40) et une sortie (42) vers un deuxième espace de flux d'air (44) au moins partiellement annulaire, le premier espace de flux d'air (38) au moins partiellement entourant le deuxième espace de flux d'air (44) et le deuxième espace de flux d'air (44) étant en communication dans sa zone radialement intérieure en relation un axe longitudinal (A) du module de brûleur (10) avec la zone d'entrée d'air (28),
**caractérisé par** la zone d'entrée d'air (28) comprenant un raccord d'entrée d'air (24) s'étendant du paroi de fond (16) et s'étendant dans l'espace entouré par le paroi circonférentiel (14) et prévoyant une pluralité d'ouvertures de passage d'air (26).

2. Le module de brûleur selon la revendication 1,
**caractérisé par** l'entrée (40) comprenant au moins une ouverture d'entrée ou/et par la sortie (42) comprenant au moins une ouverture de sortie.

3. Le module de brûleur selon la revendication 1 ou 2,
**caractérisé par** l'entrée (40) et la sortie (42) étant arrangées essentiellement en face l'un de l'autre en relation à l'axe longitudinal (A).

4. Le module de brûleur selon une des revendications 1 à 3, **caractérisé par** le deuxième espace de flux d'air (44) étant en communication avec la zone d'entrée d'air (28) par un dispositif de guidage (46) comprenant au moins une surface de guidage d'air (50).

5. Le module de brûleur selon une des revendications 1 à 4, **caractérisé par** le premier espace de flux d'air (38) ou/et le deuxième espace de flux d'air (44) étant délimités dans une première direction axiale par un premier paroi de séparation (64) se raccordant au paroi circonférentiel (12).

6. Le module de brûleur selon la revendication 5,
**caractérisé par** le premier paroi de séparation (64) séparant le premier espace de flux d'air (38) ou/et le deuxième espace de flux d'air (44) d'un espace de flux de gaz d'échappement (32).

7. Le module de brûleur selon la revendication 5 ou 6,
**caractérisé par** le premier espace de flux d'air (38) étant délimité dans sa partie radialement extérieure d'un paroi extérieur (60) se raccordant au premier paroi de séparation (64).

8. Le module de brûleur selon la revendication 7,
**caractérisé par** le paroi extérieur (60) délimitant l'espace de flux de gaz d'échappement (32) dans une zone s'étendant au-delà du premier espace de flux d'air (38).

9. Le module de brûleur selon la revendication 7 ou 8,
**caractérisé par** le premier espace de flux d'air (38) étant délimité dans une deuxième direction axiale par un paroi frontal (58) se raccordant au paroi
extérieur (60).

10. Le module de brûleur selon la revendication 9,
**caractérisé par** le premier espace de flux d'air (38) comprenant un espace (56) formé entre le paroi frontal (58) et un deuxième paroi de séparation (54) séparant ce dernier du deuxième espace de flux d'air (44), auquel se raccorde dans la partie radialement extérieure un espace annulaire (52) du premier espace de flux d'air (38).

11. Le module de brûleur selon une des revendications 1 à 10,
**caractérisé par** un médium d'évaporation poreux étant arrangé au paroi de fond (16) et/ou au paroi circonférentiel (14).

12. Le module de brûleur selon une des revendications 10 ou revendication 11, si dépendantes de la revendication 10,
**caractérisé par** l'entrée (40) à l'espace annulaire (52) du premier espace de flux d'air (38) étant ouverte.

13. Le module de brûleur selon une des revendications 10 à 12,
si dépendantes de la revendication 3,
**caractérisé par** l'espace annulaire (52) prévoyant pour l'air entrant à l'entrée (40) un passage vers la sortie (42) localisée à l'opposé respectivement au long de la moitié de sa circonférence.

14. Le module de brûleur selon une des revendications 1 à 13,
**caractérisé par** le deuxième espace de flux d'air (44) étant délimité à son côté intérieur au moins partiellement par le paroi circonférentiel (14).

15. Le module de brûleur selon la revendication 6 ou une des revendications 7 à 14, si dépendantes de la revendication 6
**caractérisé par** un tube de flamme (20) se raccordant dans la première direction axiale au paroi circonférentiel (14) délimitant l'espace de flux de gaz d'échappement (32) vers l'intérieur.
